# EUROPEAN PATENT APPLICATION

(11) **EP 1 804 501 A1**
(43) Date of publication of application: **04.07.2007**
(21) Application number: 06018683.0
(22) Date of filing: 06.09.2006
(51) Int. Cl.: H04N 5/77, G01J 5/00, G01N 25/72

(54) **Infrared thermography system**

(30) Priority: 29.12.2005 CN 200510132973
(71) Applicant: Huang, Li, HongShan District Wuhan 430070 (CN)
(72) Inventor: Huang, Li, HongShan District Wuhan 430070 (CN)
(74) Representative: Becker Kurig Straus

(57) **Abstract**

The present invention discloses an infrared thermography system, comprising: an optical system for receiving infrared radiation from objects to be measured; an infrared radiation detector for converting the infrared radiation received by said optical system into electronic signals; and a signal processing and system control device for processing the electronic signals created by said infrared radiation detector into infrared video images. In the present invention, multiple advanced technologies and functions are integrated into a single infrared thermography system, thereby advantages such as small size, light weight, easy operation, functionality, good scalability, etc, can be realized.

## Description

### CROSS-REFERENCE TO RELATED APPLICATION(S)

This application is based on the Chinese Patent Application No. 200510132973.1filed on December 29, 2005, the disclosure of which is hereby incorporated by reference

### FIELD OF THE INVENTION

The present invention generally relates to the field of infrared thermography and, more particularly, to an infrared thermography system.

### BACKGROUND OF THE INVENTION

Any object in nature presents a certain temperature, which generally indicates the physical status of the object. For instance, a machine (an engine, an electrical instrument, etc) that has not been working for long has a temperature which is consistent with the temperature of its environment. However, when it is in a working status, its temperature will be higher than the environment temperature. Therefore, it is feasible to find out the physical status and change of the physical status by measuring its temperature.

As different objects have different temperatures and the environment where a temperature is measured varies as well, contact method of temperature measurement such as using thermometer is subject to limitations.

Any object with a temperature above absolute zero can emit infrared radiation that is closely related to the temperature distribution on the object surface. Therefore, the surface temperature of an object can be determined by measuring the infrared radiation of the object and as per the correspondence relation between infrared radiation and temperature. Generally, the higher temperature is, the stronger infrared radiation is. As compared with contact method, this non-contact method of measuring temperature by infrared radiation has more advantages. For example, it is adaptable to various measurement environment, and an object temperature to be measured may be very high.

As an instrument of measuring an object temperature by infrared radiation, an infrared thermography system provides infrared radiation of an object to an infrared radiation detector via an optical system. Then, the infrared radiation detector converts infrared radiation signals, which vary in strength, into electronic signals. Through amplification and video processing, the electronic signals are finally processed into video signals and transmitted to a video monitor for display. Temperature of each pixel can be calculated according to the infrared radiation. Due to the vividness of an infrared image or video, locations of abnormal temperatures can be quickly discovered.

Till now, common infrared thermography systems have realized basic infrared radiation imaging and temperature measuring, by which accurate temperature measurement can be performed within the imaging area. The Patent US 5386117 has disclosed such an infrared thermography system.

With the advancement of science and technology, especially the rapid development of electronic technology in the past few years, technologies utilized in conventional infrared thermography systems have gradually lagged behind and result in many disadvantages such as overlarge size, extra heavy weight, complicated operation, low quality of infrared radiation images or video, etc.

Therefore, there is a need to provide an infrared thermography system having novel functions, which can overcome the above-stated disadvantages of conventional infrared thermography systems.

### SUMMARY OF THE INVENTION

The present invention provides an infrared thermography system, which comprising: an optical system for receiving infrared radiation from to be measured objects; an infrared radiation detector for converting the infrared radiation received by said optical system into electronic signals; and a signal processing and system control device for processing the electronic signals created by said infrared radiation detector into infrared video images.

In an embodiment of the present invention, the signal processing and system control device processes said video images into Video Graphics Arrays (VGA) mode. The signal processing and system control device further includes a video transform module for transforming the said VGA mode into Phase Alternating Line (PAL) mode or National Television Systems Committee (NTSC) mode.

In an embodiment of the present invention, the infrared thermography system further comprising an input device for inputting commands and/or corresponding data, said input device includes a touch screen.

In an embodiment of the present invention, the infrared thermography system further comprising an output device for outputting infrared images and/or corresponding data, said touch screen further serves as a display screen of said output device.

In an embodiment of the present invention, the infrared thermography system further comprising an output device for outputting infrared images and/or corresponding data, said output device includes an Organic Light Emitting Display (OLED) eyepiece.

In an embodiment of the present invention, the infrared thermography system further comprising an input device for inputting commands and/or corresponding data, said input device includes an automatic speech recognition system.

In an embodiment of the present invention, the infrared thermography system further comprising a storage device for storing infrared images and/or corresponding data, said storage device includes a Secure Digital card.

In an embodiment of the present invention, the infrared thermography system further comprising a network port for communicating with external devices, said network port includes a Bluetooth port.

In an embodiment of the present invention, the infrared thermography system further comprising a network port for communicating with external devices, said network port includes a USB OTG port.

In the present invention, multiple advanced technologies and functions are integrated into a single infrared thermography system, thereby advantages such as small size, light weight, easy operation, excessive functionality, good scalability, etc, can be realized.

### BRIEF DESCRIPTION ON THE DRAWINGS

As the present invention is better understood, other objects and effects of the present invention will become more apparent and easy to understand from the following description, taken in conjunction with the accompanying drawings wherein:
Fig. 1 depicts a principle block diagram of an infrared thermography system in accordance with the present invention;
Fig. 2 depicts the working process of automatic speech recognition; and
Fig. 3 depicts a perspective view of an infrared thermography system in accordance with the present invention.

In all the above drawings, the same numeral denotes identical, like or corresponding features or functions.

### DESCRIPTION OF THE PREFERRED EMBODIMENTS

Hereinafter is the detailed description, taken in combination with the accompanying drawings, of the embodiments of the present invention.

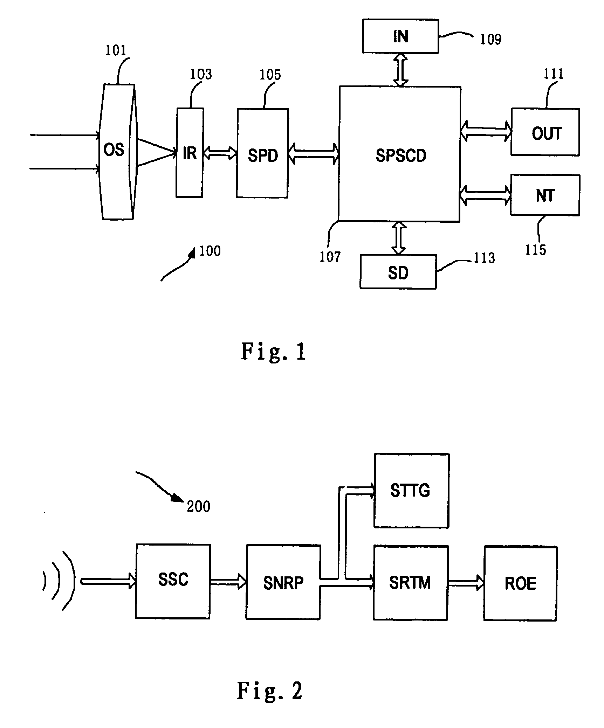

Fig. 1 depicts a principle block diagram of an infrared thermography system in accordance with the present invention. As shown in Fig. 1, the infrared thermography system 100 comprises an optical system (OS) 101, an infrared radiation (IR) detector 103, a signal preprocessing device (SPD) 105, a signal processing and system control device (SPSCD) 107, an input device (IN) 109, an output (OUT) device 111, a storage device (SD) 113 and a network port (NT) 115.

The optical system 101 is used to receive infrared radiation emitted from to be measured objects. It consists of different infrared optical lenses according to different requirements on field of view and image quality, and plays the roles of converging, filtering and focusing infrared radiation of the to be measured objects.

The infrared radiation detector 103 converts the infrared radiation that has gone through the optical system 101 into electronic signals. It may be an uncooled focal plane array detector (which can be classified into uncooled and cooled types) in which tens of thousands of sensor elements form an array. Each sensor element has relatively fine uniformity of responsivity, micron-measured size and low power consumption.

In an embodiment of the present invention, uncooled focal plane array detector with 320×240 resolution is utilized.

In another preferred embodiment of the present invention, uncooled focal plane array detector with 384 × 288 resolution is utilized, in which the effective pixel ratio increases by 44% over that with 320 × 240 resolution and the size of a single pixel is much smaller. Therefore, the obtained infrared image or video is even more exquisite.

The signal preprocessing device 105 performs pre-amplification, analog-to-digital (A/D) conversion, and other preprocessing on electronic signals outputted from the infrared radiation detector 103. Accordingly, it can comprise preamplifiers, A/D convertors, etc. (not shown).

On one hand, the signal processing and system control device 107 processes the electronic signals that present infrared radiation of the to be measured objects and have been processed by the signal preprocessing device 105 into video signals and then transmits them to the output device 111 used as a display device for display. On the other hand, the signal processing and system control device 107 carries out controls corresponding to operators' commands, for example, controlling adjusting image display effect, controlling storage of video images onto the storage device 113, controlling analysis of infrared images, controlling communication with external devices, etc. In other words, the signal processing and system control device 107 controls the operation of the input device 109, the output device 111, the storage device 113 and the network port 115 to be described below.

In an embodiment of the present invention, the signal processing and system control device 107 constitutes, in the form of a microprocessor, a component part of the entire infrared thermography system. That is, the signal processing and system control device 107 is embedded into the infrared thermography system. Thus, an advantage of the present embodiment is that the infrared thermography system is smaller and lighter than the signal processing and system control device 107 as an independent system forms the peripheral equipment of the infrared thermography system.

In an embodiment of the present invention, the signal processing and system control device 107 processes video signals into VGA (Video Graphics Array) mode that was used as a display mode of computers only. With 640 × 480 display resolution, VGA mode can greatly reinforce, in collaboration with a true-color high-brightness TFT LCD that acts as the output device 111, the definition of images.

VGA display generally requires a special display card. The infrared thermography system in accordance with the present invention simplifies the intricate functions of a display card and integrates the simplified functions into itself, and hence, the VGA display output function can be realized without a big-sized display card.

In an embodiment of the present invention, the signal processing and system control device 107 processes video signals into SVGA (Super Video Graphics Array) mode, thereby a much higher display resolution.

In another embodiment of the present invention, the signal processing and system control device 107 further includes a video transform module (not shown), which can transform video signals of VGA mode into those of PAL (Phase Alternating Line) mode or NTSC (National Television Systems Committee) mode to meet requirements of different users. In other words, in the present embodiment, the infrared thermography system in accordance with the present invention supports three display modes, i.e., VGA, PAL and NTSC. PAL and NTSC are universally adopted in current infrared thermography systems, whereas both with 320×240 resolution, neither of them offers a satisfying display effect.

The input device 109 is used to input commands and/or corresponding data. The corresponding data includes users' annotation of infrared images, etc.

In an embodiment of the present invention, the input device 109 includes a touch screen (not shown) which is used for receiving users' commands of operation of the infrared thermography system. After the infrared thermography system is initiated, the output device 111 (e.g. a display screen) will list available operation options in real time so that users can simply click them on the touch screen with a touch pen. Upon receipt of the commands, the infrared thermography system, or more accurately, the signal processing and system control system 107 will immediately perform corresponding operations, resulting in displaying subsidiary operation options, storing video images onto the storage device 113 and communicating with external devices, etc.

Compared with conventional infrared thermography systems which give out operation commands through several simple buttons in combination with a menu, the infrared thermography system in accordance with the present invention greatly facilitates users' operation, enabling users to easily operate the infrared thermography system without bearing in mind some buttons (or combination of buttons) corresponding to operation commands.

In addition, such user-friendly man-machine communication makes it easier for infrared thermography systems to integrate more functions, and even more functions can be implemented by simply clicking the touch screen. A further advantage is that with the touch screen, the infrared thermography system is much easier to operate, and accordingly time necessary for operation training is saved.

By the way, in the present embodiment of the present invention, the touch screen further acts as the display screen of the output device 111.

In another embodiment of the present invention, the input device 109 further comprises an automatic speech recognition system. Conventional infrared thermography systems must be operated with buttons. However, users cannot operate the systems under certain cases, for example, they get their hands full with the operation of other devices. Taking such situations into account, in the present embodiment of the present invention, the input device 109 of the infrared thermography system includes a function of automatic speech recognition.

Fig. 2 depicts a working process 200 of automatic speech recognition, which can include processes of speech signal capturing (SSC), signal-noise-reducing preprocessing (SNRP), speech training and template generating (STTG), speech recognizing and template matching (SRTM), and relevant operation executing (ROE) .

Before formally using the speech recognition function, users operate the infrared thermography system to capture speech signals for speech training and creating speech templates. The created speech templates can be stored onto the storage device 113. Once the infrared thermography system under speech working mode detects speech outside, it will perform speech data processing and template matching so that it can rapidly and accurately respond to the common operation commands given by users, i.e. executing corresponding operations.

In view of the complexity of operation environment, during processing speech recognition, the infrared thermography system in the present embodiment can automatically decide as per the environment whether to perform signal-noise-reducing preprocessing, so as to ensure the accuracy of speech recognition.

The automatic speech recognition system in the present embodiment includes a microphone for capturing speech signals.

In another embodiment of the present invention, the microphone is further used for capturing annotation of infrared images as made during the image recording.

The output device 111 is used for outputting infrared images and/or corresponding data which includes analysis results of infrared images and so on.

In an embodiment of the present invention, the output device 111 includes a display screen and an eyepiece, all the video images displaying on both of which come from the signal processing and system control device 107. Besides, the display screen can act as the input device 109 as well, or more specifically, the display screen can be used as the touch screen mentioned above.

In an embodiment of the present invention, an OLED (Organic Light Emitting Display) is utilized as a display device of the eyepiece.

OLED is a new-generation plane display technology after TFT (Thin-Film Technology) liquid crystal display. Conventional infrared thermography systems generally employ small LCD or CRT (Cathode Ray Tubes) screens as eyepieces, which lead to complicated architecture, large size, intricate circuits and accordingly high power consumption.

OLED, made of very thin coatings of organic materials and glass base plates, will emit light when charges are passing through these organic materials. Apart from a simple architecture since illumination of backlight sources is not required, OLED has a thickness of only 1.5mm, which is a bit more than one quarter of the thickness of LCD. With a refreshing frequency approximately 1000 times higher than that of LCD, it offers smoother and sharper video display. Furthermore, it offers a larger viewing angle (a maximum of 165 degrees) than that of LCD, which remains the same even in strong light. And finally, the range of its operating temperature is wider than that of LCD, with a lower limit reaching 40°C below zero.

In an embodiment of the present invention, the output device 111 also includes a voice playback device used for playing back the corresponding annotation stored during playing back the stored infrared video images.

The storage device 113 is used to store infrared video images and/or corresponding data. The corresponding data includes the above mentioned annotation, software for use in control, etc.

In an embodiment of the present invention, the storage device 113 comprises a Compact Flash (CF) card.

In another embodiment of the present invention, however, the storage device 113 includes a Secure Digital card. Connected to the infrared thermography system with 9 pins, a Secure Digital card offers a simpler and more reliable interface than CF card that has 50 pins. Secure Digital card has a high read-write speed such that video data can be recorded in real time. Besides a large storage density (the capacity of a single Secure Digitalcard goes up to several G Bytes), Secure Digital card boasts a smaller area and thinner thickness over CF card, thereby being easy to carry.

The adoption of large-capacity high-speed Secure Digital card lays a foundation for real-time infrared video recording. The infrared thermography system in accordance with the present invention further offers a function of infrared video recording, for which different frame frequency can be set to continuously record and store the status of monitored targets.

The network port 115 is used to communicate with external devices.

When infrared monitoring needs to simultaneously performed on different areas, multiple infrared thermography systems can be connected through the network port 115 to form an infrared thermography monitoring network. The work of the infrared thermography systems can be remotely monitored. For instance, all the infrared thermography systems are connected via their respective network ports and network wiring to a host machine located in the remote monitoring room. Said host machine may be a computer. In accordance with needs, the host machine can either call an image of a certain infrared thermography system to display or display multi-path images at the same time. Besides, the host machine can carry out special analyzing and processing of the infrared image (s) . Images captured by each infrared thermography system can be transmitted and exchanged through the network. Therefore, the incorporation of network port enables share of infrared radiation detected resources.

In an embodiment of the present invention, the network port 115 comprises a Bluetooth port to communicate with external devices that have Bluetooth ports too.

In another embodiment of the present invention, the network port 115 also includes an Ethernet network port.

In still another embodiment of the present invention, the network port 115 further includes a USB OTG (Universal Serial Bus On-the-Go) port.

USB OTG port not only has the conventional USB functions, but also enables infrared thermography systems to be configured as host machines to directly connect with and control other USB devices. In other words, direct connection and data transfer between infrared thermography systems and various other digital devices can be realized even if there is no computer.

As a result, the infrared thermography system in accordance with the present invention can directly connect to printers having USB ports to print analyzed infrared drawings in worksites, or connect to mice having USB ports to operate it under the assistance of high-resolution LCD using VGA display, or even connect to USB storage disks, USB removable hard disks, etc, to enlarge the storage capacity.

Additionally, the USB OTG port integrated into the infrared thermography system in accordance with the present invention can connect to various USB external devices by loading corresponding drivers, and thus offers a good scalability.

Currently most infrared thermography systems use conventional metal and plastic materials as main materials of their casing. However the infrared thermography system in accordance with the present invention utilizes advanced magnalium material as its casing. Magnalium material has high rigidity, light weight and good thermal conductivity. Therefore, the infrared thermography system is rugged, reliable, portable, highly electromagnetic shielding and can be better adapted to complex operation environment.

In a word, the present invention provides a new type of infrared thermography system. The infrared thermography system integrates multiple advanced technologies and functions, thereby advantages of small volume, light weight, easy operation, excessive functions, good scalability, etc, can be realized.

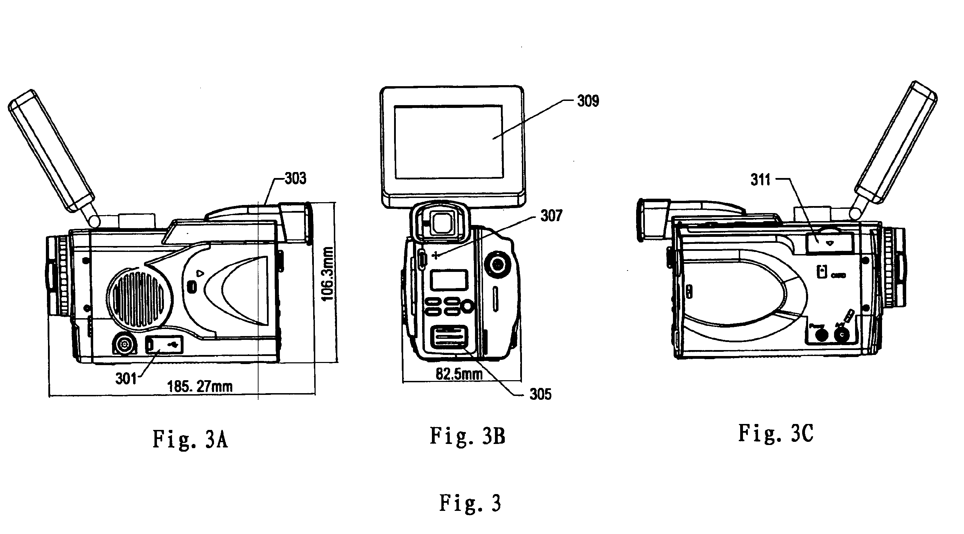

Fig. 3 depicts a perspective view of an infrared thermography system in accordance with the present invention, wherein Figs. 3A, 3B and 3C are right, back and left views, respectively. Fig. 3A illustrates a USB OTG port 301 and an OLED eyepiece 303; Fig. 3B illustrates a Bluetooth port 305, an automatic speech recognition system 307 and a touch screen 309 using (used as the display screen as well) VGA display; and Fig. 3C illustrates a position 311 where a large-capacity SD memory card can be disposed.

It is apparent from Fig. 3 to those skilled in the art that the infrared thermography system in accordance with the present invention integrates various functions. That is to say, in the present invention a plurality of advanced technologies and functions are integrated into a single infrared thermography system, thus advantages such as small size, light weight, easy operation, excessive functionality, good scalability, etc, can be realized.

In the description of the present embodiments, all the components the infrared thermography system includes are presented in a form of schematic view or block diagram to avoid unnecessary details and to facilitate understanding of the present invention.

Various modifications and alterations can be made without departing from the concept and scope of the present invention. It is therefore to be understood that the present invention is not limited to the specific embodiments thereof, but defined in the appended claims.

## Claims

1. An infrared thermography system, comprising:
an optical system for receiving infrared radiation from to be measured objects;
an infrared radiation detector for converting the infrared radiation received by said optical system into electronic signals; and
a signal processing and system control device for processing the electronic signals created by said infrared radiation detector into infrared video images.

2. The infrared thermography system in accordance with claim 1, wherein said signal processing and system control device processes said video images into Video Graphics Array mode.

3. The infrared thermography system in accordance with claim 2, wherein said signal processing and system control device includes a video transform module for transforming said Video Graphics Array mode into Phase Alternating Line mode or National Television Systems Committee mode.

4. The infrared thermography system in accordance with claim 1, wherein said infrared thermography system further comprising an input device for inputting commands and/or corresponding data, and wherein said input device includes a touch screen.

5. The infrared thermography system in accordance with claim 4, wherein said infrared thermography system further comprising an output device for outputting infrared images and/or corresponding data, and wherein said touch screen also acts as the display screen of said output device.

6. The infrared thermography system in accordance with claim 1, wherein said infrared thermography system further comprising an output device for outputting infrared images and/or corresponding data, and wherein said output device includes an Organic Light Emitting Display eyepiece.

7. The infrared thermography system in accordance with claim 1, wherein said infrared thermography system further comprising an input device for inputting commands and/or corresponding data, and wherein said input device includes an automatic speech recognition system.

8. The infrared thermography system in accordance with claim 1, wherein said infrared thermography system further comprisinga storage device for storing infrared images and/or corresponding data, and wherein said storage device includes a Secure Digital card.

9. The infrared thermography system in accordance with claim 1, wherein said infrared thermography system further comprising a network port for communicating with external devices, and wherein said network port includes a Bluetooth port.

10. The infrared thermography system in accordance with claim 1, wherein said infrared thermography system further comprising a network port for communicating with external devices, and wherein said network port includes a USB OTG port.
